Europäisches Patentamt

**European Patent Office**

Office européen des brevets

(11) Numéro de publication: **0 038 309**
A1

## DEMANDE DE BREVET EUROPEEN

(21) Numéro de dépôt: **81830056.8**

(51) Int. Cl.³: **F 24 B 7/02,** F 24 B 1/04

(22) Date de dépôt: **08.04.81**

(30) Priorité: **16.04.80 IT 940480**

(43) Date de publication de la demande: **21.10.81**
**Bulletin 81/42**

(84) Etats contractants désignés: **AT BE CH DE FR GB LI LU NL SE**

(71) Demandeur: **Marioni, Paolo, Via Arrigo da Settimello, 119, I-50041 Calenzano (IT)**

(72) Inventeur: **Marioni, Paolo, Via Arrigo da Settimello, 119, I-50041 Calenzano (IT)**

(74) Mandataire: **Martini, Lazzaro, Ufficio Brevetti Ing. Lazzaro Martini Via Brunelleschi, 1, I-50123 Firenze (IT)**

(54) **Poele à foyer à air chaud pour chauffage en système local.**

(57) Entre un corps interne métallique, constitué du foyer (1) et d'une ou plusieurs compartiments chauffants superposés (8) et d'une enveloppe externe en céramique obtenue avec plusieurs éléments (11—14) annulaires superposés, se trouve un interstice (16) par l'intermédiaire duquel l'air ambiant monte en se réchauffant.

L'alimentation se fait en charbon ou en bois et le fonctionnement qui est à convection naturelle et à irradiation est tel que l'on peut utiliser la température élevée du corps interne pour réchauffer l'air à utiliser en système local et, est tel en plus, que l'on peut maintenir la température de la surface externe de l'enveloppe entre des valeurs facilement acceptables en milieux habitables et facilements supportables au contact manuel.

- 1 -

"Poêle à foyer à air chaud pour chauffage en système local"

L'invention concerne un poêle à foyer à air chaud pour chauffage en système local qui s'alimente en charbon ou en bois. Un corps métallique constitué d'un foyer et d'un ou plusieurs compartiments chauffants superposés, entouré par une enveloppe en céramique constituée de plusieurs éléments annulaires superposés: par l'intermédiaire de l'interstice exitant entre le corps métallique et l'enveloppe, l'air ambiant monte en se réchauffant.

Nous connaissons les poêles à air chaud à briques réfractaires avec four de cimentation pour le chauffage de plusieurs locaux disposée spécialement sur des plans superposés et dans lesquels l'air chaud est acheminé dans les locaux par l'intermédiaire de tuyaux prévus à cet effet.

L'invention présente a pour but de proposer un poêle à air chaud pour le chauffage en système local.

L'invention, telle qu'elle est décrite dans les revendications, résoud le problème qui consiste à réchauffer fortement et rapidement l'air ambiant destiné au chauffage à convection, tout en maintenant basse la température de la surface externe de l'enveloppe.

Les avantages obtenus grâce à cette invention consistent essentiellement en ceci qu'on obtient un chauffage efficace, hygiénique et economique d'une pièce spécialement d'habitation; qu'on realise une inertie termique considérable, en particulier utile pour les heures nocturnes; qu'on évite tout danger d'ustions prendand le contact manuel; qu'elle permet une élégante adaptation au milieu.

L'invention sera exposée ci-après plus en détail à l'aide des dessins annéxés.

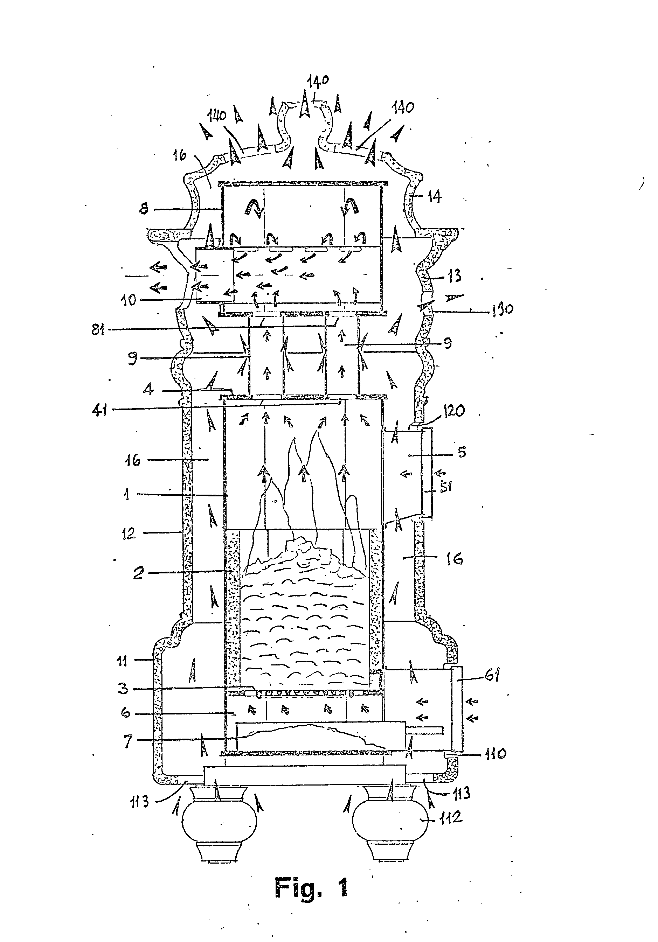

La Fig. 1 représente la section verticale et longitudinale d'un poële à air chaud conformément à l'invention;

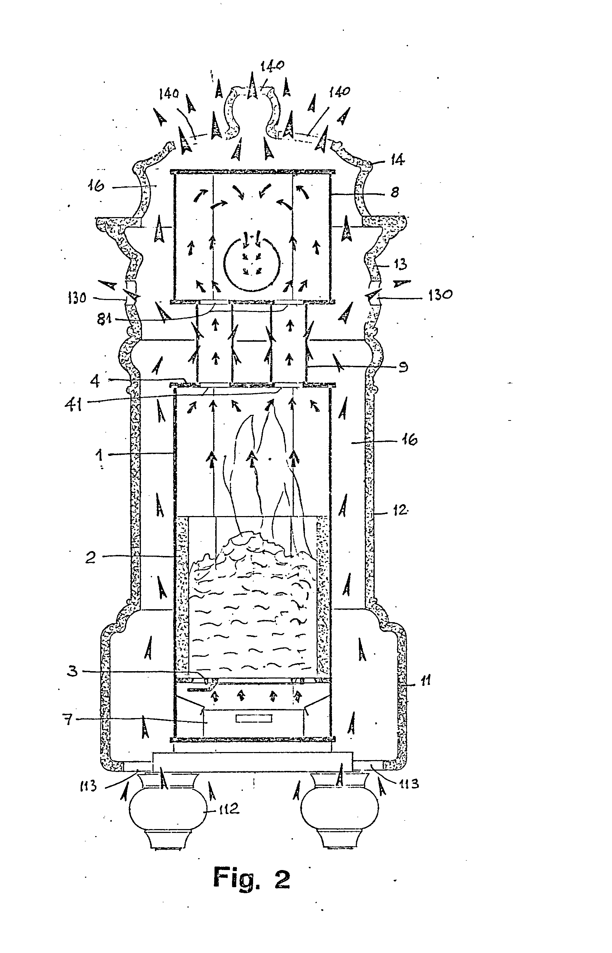

la Fig. 2 représente la section verticale transversale du même poële.

Réduit à sa structure essentielle et se référant aux dessins annexés, un poële, conformément à l'invention comprend:

(A) un foyer (1) en fonte ou en acier, principalement à corps cylindrique à axe vertical, avec sa zone de combustion recouverte à l'intérieur de matériau réfractaire (2); une grille dans sa partie inférieure (3) et une plaque (4) horizontale dans sa partie supérieure pourvue de quatre ouvertures (41) pour la sortie des produits gazeux provenants de la combustion et, en outre, pourvu en haut, d'une trémie (5) dépassant latéralement et munie d'une pe-
.tite porte (51) pour l'alimentation en combustile, et
en bas, d'un cendrier (6) muni d'une grille (61) pour
le réglage de l'air comburant et d'un tiroir (7) pour
récupérer les cendres.

(B) Un compartiment chauffant (8) en tôle d'acier,
principalement parallélépipédique à axe horizontal, avec
quatre entrées inférieures (81) reliées aux ouvertures
sus-mentionnées (41) du foyer par l'intermédiaire de
tuyaux (9) et une sortie postérieure (10).

(C) Une enveloppe composée d'une base (11) cylindrique,
de deux éléments (12-13) annualaires et d'un couvercle (14) superposée, entourants le foyer (1) et le
compartiment chauffant (8) en guise d'interstice (16)
pour le passage de l'air chaud: la base (11) a
l'avantage d'être pourvue d'une ouverture (110) frontale, au niveau du cendrier, de pieds (112) d'appui
pour le poêle et d'orifices (113) pour l'entrée de
l'air à réchauffer; l'élément (12) est pourvu d'une
ouverture (120) d'affleurement de la trémie (5), et
les éléments (13) et (14) sont pourvus de plusieurs
trous (130-140) pour la sortie de l'air chaud.

<u>REVENDICATIONS</u>

1) Poële à air chaud <sup>pour</sup> chauffage en système local caractérisé par le fait qu'il comprend un foyer (1) en métal
avec, superposé, au moins un compartiment de chauffage
(8) en métal et, une enveloppe en céramique entourant
le foyer et le compartiment de chauffage, mais à une
certaine distance à considérer comme interstice (16)
pour l'air chaud.

2) Poële à air chaud conformément à la revendication
(1) caractérisé par le fait que le foyer, dont la forme est de préférence cylindrique et circulaire à axe
vertical, est pourvu d'une grille (3) inférieure et
d'un cendrier (6) situé en dessous à tiroir (7), d'une
grille (61) de réglage de l'air comburant, au niveau
de la base (11) de l'enveloppe, d'une trémie (5) pour
l'alimentation du combustible, avec une petite porte
(51) affleurant l'élément (12) de l'enveloppe et
d'une plaque supérieure (4) horizontale ayant plusieurs
ouvertures (41) pour la sortie des gaz brûlés.

3) Poële à air chaud conformément à la revendication
(1) caractérisé par le fait que chaque compartiment
de chauffage (8), dont la forme est de préférence
parallélépipédique à axe horizontal, possède une
entrée inférieure et une sortie basse située postérieurement.

4) Poële à air chaud conformément à la revendication
(1) caractérisé par le fait que l'enveloppe est composée d'au moins quatre éléments (11-12-13+14) de base
de préférence circulaire, superposables dont l'élément de base (11) est pourvu d'une ourverture inférieure
(113), d'une ouverture latérale (110) en correspondance
avec la grille (61) et de pieds (112), l'élément (12) est pourvu d'une ouverture (120) latérale, en correspondance avec la petite porte (51) et les éléments (13 et 14) sont pourvus de plusieurs trous (130-140) latéraux et supérieurs pour la sortie de l'air chaud.

5) Poële à air chaud conformément aux revendications de 1) à 4) caractérisé par le fait qu'il est alimenté en charbon ou en bois.

0038309

**Fig. 1**

**Fig. 2**

**0038309**
Numéro de la demande

Office européen
des brevets
**RAPPORT DE RECHERCHE EUROPEENNE**

EP 81 83 0056

## DOCUMENTS CONSIDERES COMME PERTINENTS

| Catégorie | Citation du document avec indication, en cas de besoin, des parties pertinentes | Revendication concernée |
|---|---|---|
| X | <u>DE - C - 29 121</u> (ESPERON)<br>* En entier *<br><br>-- | 1,2,3,5 |
| X | <u>DE - C - 21 630</u> (MENZEL)<br>* En entier *<br><br>-- | 1-5 |
| | <u>DE - C - 821 699</u> (GROSS)<br>* En entier *<br><br>-- | 1,2,4,5 |
| | <u>FR - A - 413 903</u> (UTZSCHNEIDER)<br>* En entier *<br><br>-- | 1,4,5 |
| | <u>DE - C - 28 675</u> (HOLLWARTH)<br>* En entier *<br><br>----- | 1,4,5 |

**CLASSEMENT DE LA DEMANDE (Int. Cl.³)**

F 24 B  7/02
1/04

**DOMAINES TECHNIQUES RECHERCHES (Int. Cl.³)**

F 24 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-07-1981 | VANHEUSDEN |

OEB Form 1503.1  06.78